# EUROPÄISCHE PATENTSCHRIFT

(11) **EP 1 157 147 B1**
(45) Veröffentlichungstag und Bekanntmachung des Hinweises auf die Patenterteilung: **08.01.2003**
(21) Anmeldenummer: 00906302.5
(22) Anmeldetag: 09.02.2000
(51) Int. Cl.: C23C 24/10, C23C 4/16

(54) **VERFAHREN UND VORRICHTUNG ZUM HERSTELLEN VON VERSCHLEISSFESTEN, TRIBOLOGISCHEN ZYLINDERLAUFFLÄCHEN**
METHOD AND DEVICE FOR PRODUCING WEAR-RESISTANT TRIBOLOGICAL CYLINDER RUNNING SURFACES
PROCEDE ET DISPOSITIF DE REALISATION DE SURFACES DE GLISSEMENT DE CYLINDRES TRIBOLOGIQUES RESISTANT A L'USURE

(30) Priorität: 19.02.1999 DE 19907105
(43) Veröffentlichungstag der Anmeldung: 28.11.2001
(73) Patentinhaber: Volkswagen Aktiengesellschaft, 38436 Wolfsburg (DE); VAW aluminium AG, 53117 Bonn (DE)
(72) Erfinder: HEINEMANN, Rolf, D-38165 Lehre (DE); FÄRBER, Klaus, D-38518 Gifhorn (DE); SACH, Achim, D-88085 Langenargen (DE)
(86) Internationale Anmeldenummer: EP0001020
(87) Internationale Veröffentlichungsnummer: WO00049200

(56) Entgegenhaltungen:
- EP-A- 0 415 570
- EP-A- 0 837 152
- EP-A- 0 950 461
- DE-A- 2 743 992
- DE-A- 19 533 960
- US-A- 5 043 548
- US-A- 5 359 172

## Beschreibung

Die Erfindung betrifft ein Verfahren zum Herstellen von verschleißfesten, tribologischen Zylinderlaufflächen für in Zylindern eines Kurbelgehäuses einer Brennkraftmaschine laufende Kolben, wobei ein Strahl eines pulverförmigen Werkstoffes durch einen Laserstrahl eines Lasers geführt wird, welcher auf eine Auftreffläche des Strahles auf die Zylinderlauffläche gerichtet wird, gemäß dem Oberbegriff des Anspruchs 1. Die Erfindung betrifft ferner eine Vorrichtung zum Herstellen von verschleißfesten, tribologischen Zylinderlaufflächen für in Zylindern eines Kurbelgehäuses einer Brennkraftmaschine laufende Kolben, mit einem Laser und einer Pulverzuführungseinrichtung, welche einen Strahl eines pulverförmigen Werkstoffes durch einen Laserstrahl des Lasers führt, gemäß dem Oberbegriff des Anspruchs 9.

Die für Zylinderkurbelgehäuse vorwiegend eingesetzten untereutektischen Aluminium-Silizium-Legierungen sind aufgrund des zu geringen Anteils der verschleißfesten Siliziumphase für die tribologische Beanspruchung des Systems Kolben-Kolbenring-Zylinderlaufbahn ungeeignet. Übereutektische Legierungen, z.B. die Legierung AlSi₇Cu₄Mg besitzen einen ausreichenden Anteil an Siliziumkristalliten. Dieser harte, verschleißbeständige Gefügebestandteil wird durch chemische und/oder mechanische Bearbeitungsstufen gegenüber der aus dem Aluminiummischkristall bestehenden Matrix hervorgehoben und bildet einen erforderlichen Tragflächenanteil. Nachteilig wirkt sich jedoch die gegenüber den untereutektischen und naheutektischen Legierungen mangelhafte Vergießbarkeit, die schlechte Bearbeitbarkeit und die hohen Kosten für diese Legierung aus.

Eine Möglichkeit zur Umgehung dieses Nachteils ist das Eingießen von Laufbuchsen aus verschleißbeständigem Material wie z.B. Grauguß- und übereutektischen Aluminiumlegierungen. Problematisch ist hier jedoch die Verbindung zwischen Buchse und Umguß, welcher alleine durch eine mechanische Verzahnung gewährleistet wird. Durch Einsatz eines porösen keramischen Buchsenwerkstoffs ist es möglich, beim Gießprozeß diesen zu infiltrieren und zu einer stofflichen Verbindung zu gelangen. Dazu ist eine langsame Formfüllung sowie die Anwendung von hohem Druck erforderlich, was die Wirtschaftlichkeit des Verfahrens erheblich herabsetzt.

Alternativ werden unter- und naheutektische Legierungen der galvanische Beschichtungen direkt auf die Laufbahnen aufgebracht. Dies ist jedoch teuer und tribochemisch nur ungenügend beständig. Eine weitere Alternative bilden thermische Spritzschichten, welche ebenfalls direkt auf die Laufflächen appliziert werden. Die Haftfestigkeit dieser Schichten ist jedoch aufgrund einer alleinigen mikromechanischen Verklammerung nur ungenügend.

Es wurde daher bereits vorgeschlagen, die Oberflächenmodifikationen Umschmelzen, Einlegieren, Dispergieren und Beschichten durch den Einsatz eines Lasers auszuführen, wie beispielsweise aus der DE 196 43 029 A1 bekannt.

Die EP 0 622 476 A1 beschreibt ein Verfahren zum Aufbringen von laserinduzierten MMC-Beschichtungen (MMC = Metal Matrix Composite) auf Metallsubstrate. Beim Beschichten einer Substratoberfläche durchläuft ein Strahl aus inertem Gas, welcher ein Pulvergemisch trägt, einen Laserstrahl, wobei der Laserstrahl auf die Auftreffläche des Pulvergemisches auf der Substratoberfläche gerichtet ist.

Hierbei ergibt sich jedoch der Nachteil, daß die getrennte Führung von Laserstrahl und Pulverstrahl aufwendig sowie kosten- und zeitintensiv ist.

Aus der Schrift EP 0 837 152 A1 ist bereits ein Verfahren zum Beschichten eines aus einer Aluminium-Legierung bestehenden Bauteils einer Brennkraftmaschine mit Silizium bekannt, bei dem ein Laserstrahl aus einer rotierenden Vorrichtung mittels eines Spiegels auf eine Zylinderinnenfläche gerichtet ist. Desweiteren ist dort eine Pulverzuführungseinrichtung vorgesehen, die das Beschichtungspulver in Richtung der zu bearbeitenden Oberfläche fördert, wobei das Beschichtungspulver vor Auftreffen auf die zu beschichtende Oberfläche durch den Laserstrahl vollständig aufgeschmolzen wird. Das Beschichtungsmaterial wird somit in Form von Schmelztröpfchen auf die zu beschichtende Oberfläche aufgetragen, wobei der Werkstoff des zu beschichtenden Materials an seiner Oberfläche nicht im Gefüge verändert werden soll.

Dabei hat dieses bekannte Beschichtungsverfahren den Nachteil, daß der Beschichtungswerkstoff lediglich auf die Oberfläche aufgetragen wird, eine Einlegierung mit einer entsprechenden Gefügeveränderung an der zu beschichtenden Bauteiloberfläche jedoch nicht erfolgen kann.

Der vorliegenden Erfindung liegt daher die Aufgabe zugrunde, ein verbessertes Verfahren der oben genannten Art sowie eine verbesserte Vorrichtung der oben genannten Art zur Verfügung zu stellen, wobei die oben genannten Nachteile überwunden werden und auf einfache Weise eine örtlich präzise Oberflächenbearbeitung durchführbar ist.

Diese Aufgabe wird erfindungsgemäß durch ein Verfahren der oben genannten Art mit den in Anspruch 1 gekennzeichneten Merkmalen und durch eine Vorrichtung der oben genannten Art mit den in Anspruch 9 gekennzeichneten Merkmalen gelöst. Vorteilhafte Ausgestaltungen der Erfindung sind in den abhängigen Ansprüchen angegeben.

Dazu ist es bei einem Verfahren der oben genannten Art erfindungsgemäß vorgesehen, daß der Laser koaxial mit dem Zylinder angeordnet, um seine Längsachse rotiert sowie gleichzeitig in Richtung der Längsachse vorgeschoben und der Laserstrahl in Richtung Auftreffläche des Strahles auf der Zylinderiauffläche abgelenkt wird, wobei der pulverförmige Werkstoff durch den rotierenden Laser hindurch zugeführt wird.

Dies hat den Vorteil, daß keine Grenzflächen zwischen den Materialien des Kurbelgehäuses und der verschleißfesten Zylinderlauffläche mehr vorhanden sind, wie dies bei eingesetzten Graugußbuchsen der Fall ist. Durch die nicht mehr notwendigen Graugußbuchsen wird eine Gewichtsreduzierung und damit eine Kraftstoffeinsparung erzielt. Es ist ein optimaler Wärmeübergang zwischen den Materialien gewährleistet. Die Erfindung ist für alle Alu-Flächen einsetzbar, egal in welchem Gießverfahren das zu behandelnde Bauteil erstellt ist. Es ist eine genaue Einstellbarkeit der Einlegierung oder der Beschichtung, eine genaue Dickenbestimmung des Beschichtungsauftrages und der Einlegierungstiefe sowie eine genaue Punkt oder Flächenbestimmbarkeit der Einlegierung oder der beschichteten Fläche gewährleistet. Durch die genaue Einstellung bzw. die hohe Variabilität des Legierungs- und Auftragsverfahrens können mehrere Bearbeitungsschritte, wie beispielsweise grobes Vorspindeln, entfallen, was zu einer entsprechenden Kosteneinsparung der Fertigung führt. Die Vorbearbeitung entfällt dabei ggf. bis auf das Honen/Läppen mit entsprechender Kosteneinsparung der Fertigung. Es ist auch ein poröser, mit Lunkern versetzter Guß verwendbar, da durch die exakte Steuerung oder ggf. einen zweimaligen Auftrag Lunker gefüllt werden können. Die Erfindung ist für plane, konkave und konvexe Flächen wie auch für Bohrungen und Rohre einsetzbar. Durch die bessere Zylinderlauffläche wird eine Reibleistung- und Kraftstoffverbrauchsminimierung erzielt. Es ist eine Rohteillänge reduzierbar, was eine Gewichtseinsparung beim Gießen erzielt. Es sind gezielt nur gewünschte Flächen exakt bearbeitbar, wie beispielsweise oberer Totpunkt und unterer Totpunkt im Zylinder des Kurbelgehäuses, wodurch sich eine entsprechende Kosteneinsparung ergibt. Durch ein entsprechend reduziertes Einbauspiel zwischen einem Kolbenring und der Zylinderbohrung ergibt sich ein geringerer Ölverbrauch. Im Zusammenhang damit ist eine Reduzierung einer Kolbenringspannung möglich. Die Erfindung ist wegen der Möglichkeit einer großen Dickenauftragung der Beschichtung Honbrillentauglich. Durch die exakte Bestimmbarkeit der verschleißfesten Schicht ist die Erfindung ferner Reparaturstufentauglich.

Besondere Strukturen, wie beispielsweise Öltaschen, werden bevorzugt durch zusätzliche Laseranwendung mittels Verdampfen bzw. Herausschleudern einer erzeugten Schmelze eingebracht.

Zweckmäßigerweise ist der pulverförmige Werkstoff ein silizium-, wolfram- und/oder nickelhaltiges Material.

In einer bevorzugten Ausführungsform wird die Laserenergie derart gewählt wird, daß ein Auftragen und/oder Einlegieren des durch den Laserstrahl verlaufenden, im Strahl transportierten, pulverförmigen Werkstoffes erfolgt. Zweckmäßigerweise werden eine Rotationsgeschwindigkeit des Lasers, eine Translationsgeschwindigkeit des Lasers und eine Laserenergie derart gewählt, daß eine Auftragung des pulverförmigen Werkstoffes in einer Dicke von etwa 800 µm bis 1000 µm bzw. eine Einlegierung mit einer Eindringtiefe von etwa 250 µm mit einem gleichzeitigen Auftrag in einer Dicke von etwa 250 µm erfolgt.

Die Laserenergie beträgt beispielsweise etwa 2 kW. Optional durchläuft der Laser den Zylinder mehrmals oder einmalig zum Ausführen von Arbeitsschritten. Besonders bevorzugt ist ein einmaliger Laserdurchgang.

Bei einer Vorrichtung der o.g. Art ist es erfindungsgemäß vorgesehen, daß die Pulverzuführungseinrichtung durch den Laser hindurch verlaufend angeordnet ist, wobei eine Strahlumlenkvorrichtung für den Laserstrahl derart angeordnet ist, daß diese den Laserstrahl auf einen Auftreffpunkt des Strahls mit dem pulverförmigen Werkstoff auf die Zylinderlauffläche lenkt.

Dies hat den Vorteil, daß der Laser und die Pulverzuführungseinrichtung koaxial zum Zylinder anordbar sind und durch einfaches rotieren des Lasers bei gleichzeitiger Translation desselben entlang einer Zylinderachse eine Erstellung der Zylinderlauffläche in dem Zylinder erfolgt.

Zweckmäßigerweise umfaßt die Strahlumlenkvorrichtung wenigstens einen Spiegel, Glasfasern und/oder ein Linsensystem.

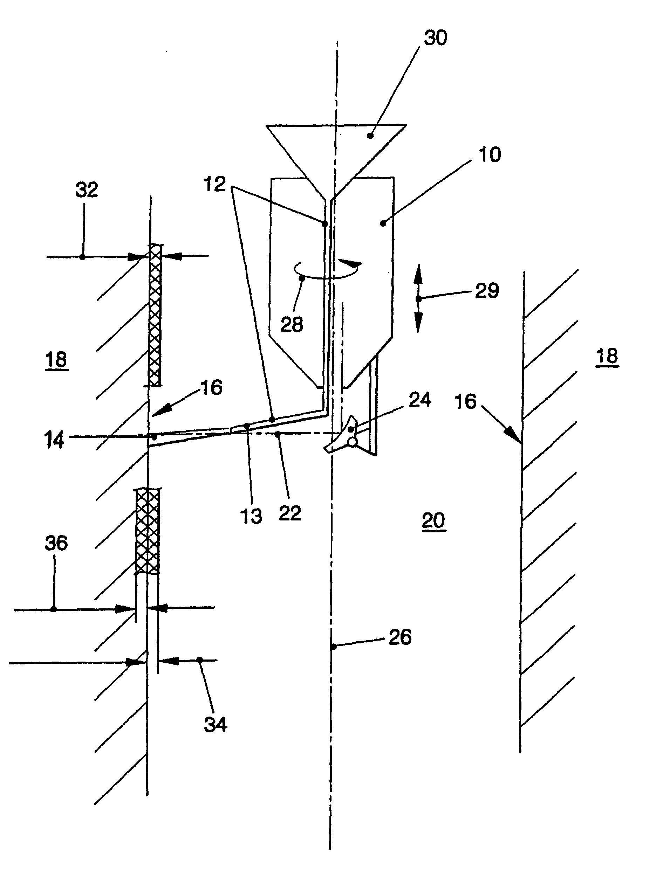

Weitere Merkmale, Vorteile und vorteilhafte Ausgestaltungen der Erfindung ergeben sich aus den abhängigen Ansprüchen, sowie aus der nachstehenden Beschreibung der Erfindung anhand der einzigen Fig., welche in einer schematischen Schnittansicht eine bevorzugte Ausführungsform einer erfindungsgemäßen Vorrichtung illustriert.

Die in der einzigen Fig. dargestellte, bevorzugte Ausführungsform einer erfindungsgemäßen Vorrichtung umfaßt einen Laser 10 und eine Pulverzuführungseinrichtung 12, welche einen Strahl 13 aus einem pulverförmigen Werkstoff in einem Rohrsystem durch den Laser 10 hindurch führt und in Richtung auf einen Brenn- und Anschmelzpunkt 14 an einer Zylinderlauffläche 16 einer Zylinderwand 18 eines Zylinders 20 derart leitet, daß nach dem Austritt des Pulverstrahles 13 aus der Pulverzuführungseinrichtung 12 der Strahl 13 einen Laserstrahl 22 des Lasers 10 schneidet. Am Laser 10 ist ferner eine Strahlumlenkvorrichtung 24 vorgesehen, welche den Laserstrahl 22 in Richtung auf den Brenn- und Anschmelzpunkt 14 umlenkt.

Die Kombination aus Laser 10 und Pulverzuführungseinrichtung 12 ist koaxial zu einer Mittelachse 26 des Zylinders 20 angeordnet und um diese Achse 26 rotierbar, wie mit Pfeil 28 angedeutet. Ferner ist die Kombination aus Laser 10 und Pulverzuführungseinrichtung 12 entlang der Achse 26 in der Art einer Translationsbewegung vorschiebbar, wie durch Pfeil 29 angedeutet. Desweiteren ist ein Trichter 30 zum Beschicken der Pulverzuführungseinrichtung 12 mit Pulver vorgesehen.

Durch die Rotation und Translation erfolgt eine entsprechende Überstreichung und damit Bearbeitung der Zylinderlauffläche 16. Ein Dicke eines Materialauftrags ist mit 32 bzw. 34 und eine Eindringtiefe ist mit 36 bezeichnet.

Mit dem Laser 10 werden verschleißfeste, tribologische Zylinderlaufbahnen 16 in einem nicht dargestellten Aluminiumkurbelgehäuse durch Zuführung von Silizium-, wolframund/oder nickelhaltigen Materialien bzw. Hartstoffen durch Einlegieren in oder Beschichten auf die Aluminium-Flächen 16 erstellt. Die Zuführung der Hartstoffe erfolgt innerhalb des rotierenden Lasers 10. Hier liegt das zuzuführende Material vorzugsweise in Pulverform vor.

Die so erstellte, tribologisch geeignete, verschleißfeste Schicht ist dickenmäßig durch steuerbare Parameter, wie Größe der Einflußzone, der Struktur und Anzahl der eingebrachten Elemente je nach Bedarf einstellbar. Eine Variabilitätserhöhung wird zusätzlich durch den Vorschub 29, die genaue Dosierung des zugeführten Materials und die Leistung des rotierenden Lasers 10 erreicht, so daß eine Raupenlage und -höhe fein oder grob strukturierbar ist.

Bei der Beschichtung erfolgen vorzugsweise Auftragungen 32 von ca. 800 µm bis 1000 µm und bei der Beschichtung werden Eindringtiefen 36 von ca. 250 µm mit einem gleichzeitigen Auftrag 34 von ca. 250 µm mit einem ca. 2 kW Laser realisiert. Eine Freistellung der verschleißfesten Teile erfolgt bevorzugt durch chemischen oder mechanischen Abtrag.

## Patentansprüche

1. Verfahren zum Herstellen von verschleißfesten, tribologischen Zylinderiaufflächen für in Zylindern eines Kurbelgehäuses einer Brennkraftmaschine laufende Kolben, wobei ein Strahl eines pulverförmigen Werkstoffes durch einen Laserstrahl eines Lasers geführt wird, welcher auf eine Auftreffläche des Strahles auf die Zylinderlauffläche gerichtet wird, **dadurch gekennzeichnet, daß** der Laser koaxial mit dem Zylinder angeordnet, um seine Längsachse rotiert sowie gleichzeitig in Richtung der Längsachse vorgeschoben und der Laserstrahl in Richtung Auftreffläche des Strahles auf der Zylinderlauffläche abgelenkt wird, wobei der pulverförmige Werkstoff durch den rotierenden Laser hindurch zugeführt wird, so daß die Auftreffläche des Pulverstrahles an der Zylinderlauffläche vor dem Auftreffen des pulverförmigen Werkstoffes an ihrer Oberfläche mittels des Laserstrahles angeschmolzen wird.

2. Verfahren nach Anspruch 1,
**dadurch gekennzeichnet, daß**
mit einer zusätzlichen Laseranwendung besondere Strukturen, wie beispielsweise Öltaschen, in der Zylinderlauffläche eingebracht werden.

3. Verfahren nach Anspruch 1 oder 2,
**dadurch gekennzeichnet, daß**
der pulverförmige Werkstoff ein silizium-, wolfram- und/oder nickelhaltiges Material ist.

4. Verfahren nach einem der vorhergehenden Ansprüche,
**dadurch gekennzeichnet, daß**
die Laserenergie derart gewählt wird, daß ein Auftragen und/oder Einlegieren des durch den Laserstrahl verlaufenden, im Strahl transportierten, pulverförmigen Werkstoffes erfolgt.

5. Verfahren nach einem der vorhergehenden Ansprüche,
**dadurch gekennzeichnet, daß**
eine Rotationsgeschwindigkeit des Lasers, eine Translationsgeschwindigkeit des Lasers und eine Laserenergie derart gewählt werden, daß eine Auftragung des pulverförmigen Werkstoffes in einer Dicke von etwa 800 µm bis 1000 µm erfolgt.

6. Verfahren nach einem der vorhergehenden Ansprüche,
**dadurch gekennzeichnet, daß**
eine Rotationsgeschwindigkeit des Lasers, eine Translationsgeschwindigkeit des Lasers und eine Laserenergie derart gewählt werden, daß eine Einlegierung mit einer Eindringtiefe von etwa 250 µm mit einem gleichzeitigen Auftrag in einer Dicke von etwa 250 µm erfolgt.

7. Verfahren nach einem der vorhergehenden Ansprüche,
**dadurch gekennzeichnet, daß**
eine Laserenergie etwa 2 kW beträgt.

8. Verfahren nach einem der vorhergehenden Ansprüche,
**dadurch gekennzeichnet, daß**
der Laser den Zylinder mehrmals oder einmalig zum Ausführen von Arbeitsschritten durchläuft.

9. Vorrichtung zum Herstellen von verschleißfesten, tribologischen Zylinderlaufflächen (16) für in Zylindern (20) eines Kurbelgehäuses einer Brennkraftmaschine laufende Kolben, mit einem Laser (10) und einer Pulverzuführungseinrichtung (12), welche einen Strahl (13) eines pulverförmigen Werkstoffes durch einen Laserstrahl (22) des Lasers (10) führt,
**dadurch gekennzeichnet, daß**
die Pulverzuführungseinrichtung (12) durch den Laser (10) hindurch verlaufend angeordnet ist, wobei eine Strahlumlenkvorrichtung (24) für den Laserstrahl (22) derart angeordnet ist, daß diese den Laserstrahl (22) auf einen Auftreffpunkt (14) des Strahls (13) mit dem pulverförmigen Werkstoff auf die Zylinderlauffläche (16) lenkt.

10. Vorrichtung nach Anspruch 9,
**dadurch gekennzeichnet, daß**
die Strahlumlenkvorrichtung (24) wenigstens einen Spiegel, ein Linsensystem und/oder Glasfasern umfaßt.

## Claims

1. Process for producing wear-resistant, tribological cylinder bearing surfaces for pistons which run in cylinders of a crankcase of an internal-combustion engine, a jet of a pulverulent material being guided through a laser beam from a laser, which is directed onto a surface where the jet impinges on the cylinder bearing surface, **characterized in that** the laser is arranged coaxially with the cylinder, rotates about its longitudinal axis and is simultaneously advanced in the direction of the longitudinal axis, and the laser beam is diverted towards the surface where the jet impinges on the cylinder bearing surface, the pulverulent material being fed through the rotating laser in such a way that the surface where the powder jet impinges on the cylinder bearing surface is partially melted by means of the laser beam before the pulverulent material impinges on it.

2. Process according to Claim 1, **characterized in that** particular structures, such as for example oil pockets, are introduced into the cylinder bearing surface by an additional deployment of laser.

3. Process according to Claim 1 or 2, **characterized in that** the pulverulent material is a silicon-containing, tungsten-containing and/or nickel-containing material.

4. Process according to one of the preceding claims, **characterized in that** the laser energy is selected in such a manner that the pulverulent material which runs through the laser beam and is transported in the jet is applied and/or alloyed in.

5. Process according to one of the preceding claims, **characterized in that** a rotational speed of the laser, a translational speed of the laser and a laser energy are selected in such a manner that the pulverulent material is applied in a thickness of approximately 800 µm to 1000 µm.

6. Process according to one of the preceding claims, **characterized in that** a rotational speed of the laser, a translational speed of the laser and a laser energy are selected in such a manner that alloying-in with a penetration depth of approximately 250 µm takes place at the same time as an application in a thickness of approximately 250 µm.

7. Process according to one of the preceding claims, **characterized in that** a laser energy is approximately 2 kW.

8. Process according to one of the preceding claims, **characterized in that** the laser passes through the cylinder several times or once for the purpose of carrying out working steps.

9. Device for producing wear-resistant, tribological cylinder bearing surfaces (16) for pistons which run in cylinders (20) of a crankcase of an internal-combustion engine, having a laser (10) and a powder feed device (12), which guides a jet (13) of a pulverulent material through a laser beam (22) of the laser (10), **characterized in that** the powder feed device (12) is arranged so that it runs through the laser (10), a beam-deflecting device (24) for the laser beam (22) being arranged in such a manner that it diverts the laser beam (22) onto a point (14) where the jet (13) comprising the pulverulent material impinges on the cylinder bearing surface (16).

10. Device according to Claim 9, **characterized in that** the beam-deflecting device (24) comprises at least one mirror, a lens system and/or glass fibres.

## Revendications

1. Procédé de réalisation de surfaces de glissement de cylindres tribologiques résistant à l'usure pour des pistons qui se déplacent dans les cylindres d'un carter de vilebrequin d'un moteur à combustion, un jet de matériau poudreux étant acheminé à travers un rayon laser d'un laser dirigé sur une surface d'impact du jet sur la surface de glissement du cylindre, **caractérisé en ce que** le laser est disposé de manière coaxiale par rapport au cylindre, tourne autour de son axe longitudinal et est en même temps décalé en direction de l'axe longitudinal et le rayon laser est dévié en direction de la surface d'impact du jet sur la surface de glissement du cylindre, le matériau poudreux étant acheminé à travers le laser en rotation de manière à ce que la surface d'impact du jet de poudre entre en fusion sur la surface de glissement du cylindre sous l'effet du rayon laser avant que le matériau poudreux n'atteigne sa surface.

2. Procédé selon la revendication 1, **caractérisé en ce que** des structures spéciales comme, par exemple, des poches à huile sont aménagées dans la surface de glissement du cylindre avec une application supplémentaire du laser.

3. Procédé selon la revendication 1 ou 2, **caractérisé en ce que** le matériau poudreux est un matériau contenant du silicium, du tungstène et/ou du nickel.

4. Procédé selon l'une des revendications précédentes, **caractérisé en ce que** l'énergie du laser est choisie de telle manière à produire une application et/ou une incrustation du matériau poudreux transporté dans le jet et diffusé par le rayon laser.

5. Procédé selon l'une des revendications précédentes, **caractérisé en ce qu'**une vitesse de rotation du laser, une vitesse de translation du laser et une énergie du laser sont choisies de telle manière qu'une application du matériau poudreux s'effectue sur une épaisseur comprise entre environ 800 µm et 1000 µm.

6. Procédé selon l'une des revendications précédentes, **caractérisé en ce qu'**une vitesse de rotation du laser, une vitesse de translation du laser et une énergie du laser sont choisies de telle manière qu'une incrustation s'effectue avec une profondeur d'incrustation d'environ 250 µm avec une application simultanée sur une épaisseur d'environ 250 µm.

7. Procédé selon l'une des revendications précédentes, **caractérisé en ce qu'**une énergie du laser est d'environ 2 kW.

8. Procédé selon l'une des revendications précédentes, **caractérisé en ce que** le laser traverse le cylindre plusieurs fois ou une seule fois pour exécuter les étapes de travail.

9. Dispositif de réalisation de surfaces de glissement de cylindres tribologiques résistant à l'usure (16) pour des pistons qui se déplacent dans les cylindres (20) d'un carter de vilebrequin d'un moteur à combustion, comprenant un laser (10) et un dispositif d'alimentation en poudre (12) qui achemine un jet (13) d'un matériau poudreux à travers un rayon laser (22) du laser (10), **caractérisé en ce que** le dispositif d'alimentation en poudre (12) est disposé de manière à passer à travers le laser (10), un dispositif de déviation du rayon (24) pour le rayon laser (22) étant disposé de telle manière que celui-ci dévie le rayon laser (22) sur un point d'impact (14) du jet (13) de matériau poudreux sur la surface de glissement du cylindre (16).

10. Dispositif selon la revendication 9, **caractérisé en ce que** le dispositif de déviation du rayon (24) comprend au moins un miroir, un système de lentilles et/ou des fibres optiques.
